# EUROPEAN PATENT SPECIFICATION

(11) **EP 2 807 800 B1**
(45) Date of publication and mention of the grant of the patent: **17.10.2018**
(21) Application number: 12866975.1
(22) Date of filing: 27.01.2012
(51) Int. Cl.: H04L 12/54, H04L 29/06, H04N 21/254, G06F 21/62, H04B 5/00, H04N 21/414, H04N 21/8355, H04N 21/858

(54) **PERMISSIONS FOR EXPLOITABLE CONTENT**
BERECHTIGUNGEN FÜR VERWERTBARE INHALTE
AUTORISATIONS POUR UN CONTENU EXPLOITABLE

(43) Date of publication of application: 03.12.2014
(73) Proprietor: Hewlett-Packard Development Company, L.P., Houston, TX 77070 (US)
(72) Inventor: BHATIA, Rajesh, Bangalore Karnataka 560 103 (IN)
(74) Representative: Samson & Partner Patentanwälte mbB
(86) International application number: PCT/IN2012/000060
(87) International publication number: WO 2013/111142

(56) References cited:
- EP-A2- 1 942 429
- WO-A2-2007/059377
- CN-A- 1 615 481
- CN-A- 101 038 589
- US-A1- 2007 203 841
- US-A1- 2009 313 663
- US-A1- 2011 055 901

## Description

### BACKGROUND

Consumer devices such as tablets, laptops, mobile phones, netbooks and printers are growing at an exponential pace. Increasingly, many such devices have access to application ecosystems that allow content to be downloaded and exploited on a compatible device.

US 2007/0203841 A1 relates to providing content to an access device from a content delivery platform, wherein the content delivery platform receives an request sent to an address for the content delivery platform, that the access device desires access to the content. The content delivery platform determines if the device has properly purchased the content. If the content has been purchased, the request gets redirected to a digital rights server and processed in order to determine the digital rights for the content using the address used in the request and providing the digital rights to the user such that the access device can access the content. In one embodiment, the address is provided in a silent header of the content file.

WO 2007/059377 A2 relates to a content packager or media provider to provide encrypted content files to media devices over a LAN. The content packager and/or distributor also determines an address identifying one or more locations where a license associated with the content encrypted files may be found and provides the address to the communication device. For example, the address may be a URL that specifies locations where a license that includes the content decryption key may be purchased.

### BRIEF DESCRIPTION OF DRAWINGS

The following description includes discussion of figures having illustrations given by way of example of implementations of embodiments of the invention. The drawings should be understood by way of example, not by way of limitation. As used herein, references to one or more "embodiments" are to be understood as describing a particular feature, structure, or characteristic included in at least one implementation of the invention. Thus, phrases such as "in one embodiment" or "in an alternate embodiment" appearing herein describe various embodiments and implementations of the invention, and do not necessarily all refer to the same embodiment. However, they are also not necessarily mutually exclusive.
Figure 1 is a block diagram illustrating a system according to various embodiments.
Figure 2 is a block diagram illustrating a system according to various embodiments.
Figure 3 is a flow diagram of operation in a system according to various embodiments.
Figure 4 is a flow diagram of operation in a system according to various embodiments.

### DETAILED DESCRIPTION

Embodiments described herein associate access rights with content available from a content management and/or distribution system. As used herein, an exploitation device is a computing device capable of exploiting digital content for human consumption (e.g., playing audio and/or video files, displaying text and/or images, printing text and/or images, etc.). As described herein, exploitation devices check whether a user is authorized to exploit (e.g., view or print) content before it is actually exploited on the device.

In various embodiments, an exploitable content file includes an embedded identifier that points to a location where exploitation permissions for the content are stored at a remote location (e.g., on a network server). Thus, when a user attempts to access exploitable content, the exploitation device checks the exploitation permissions corresponding to the identifier (e.g., URL or Uniform Resource Locator) and grants access to the content if the appropriate permissions exist. Further details corresponding to various embodiments are described below.

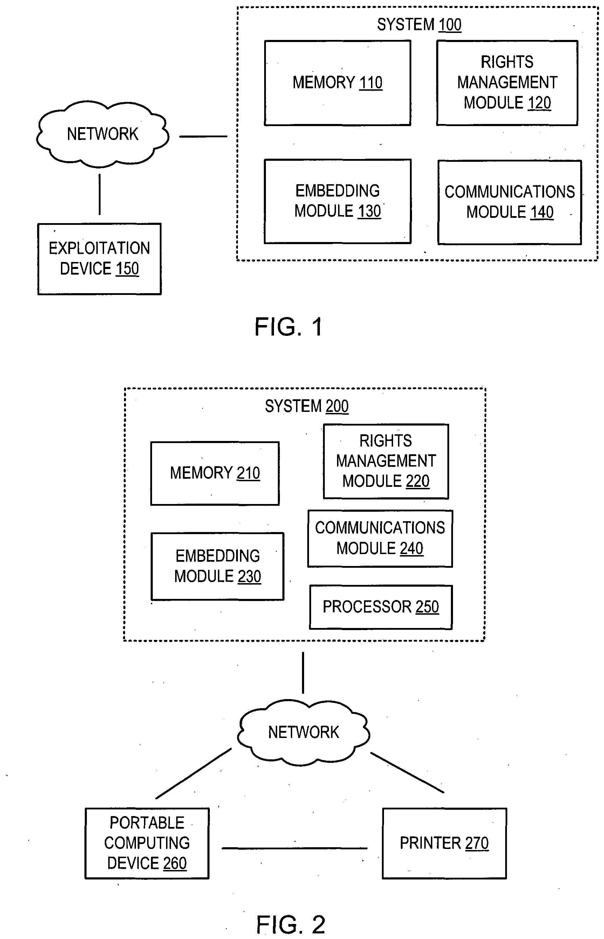

Figure 1 is a block diagram illustrating a system according to various embodiments. Figure 1 includes particular components, modules, etc. according to various embodiments. However, in different embodiments, more, fewer, and/or other components, modules, arrangements of components/modules, etc. may be used according to the teachings described herein. In addition, various components, modules, etc. described herein may be implemented as one or more software modules, hardware modules, special-purpose hardware (e.g., application specific hardware, application specific integrated circuits (ASICs), embedded controllers, hardwired circuitry, etc.), or some combination of these. As shown by the dotted line, the modules of system 100 may be incorporated into a single physical device or they may be distributed across multiple physical devices, for example, over a network.

A memory 110 stores an exploitable content file. As used herein, an exploitable content file refers to a content file capable of exploitation on an exploitation device. For example, a document file that can be displayed and/or printed for a human to read may be an exploitable content file. Audio files (e.g., MP3 files) and video files (e.g., .AVI files, .MWV files, etc.) may also be examples of exploitable content files. While exploitable content files may be compatible across multiple devices, it is not necessary that an exploitable content file be compatible across all types of exploitation devices. For example, an audio file may be an exploitation content file even though it may not be printed (i.e., exploited) on a printer (which is an example of exploitation device).

Rights management module 120 manages exploitation permissions for the exploitable content file specific to an exploitation entity. While an exploitation entity may be a single device, it could also be a class of exploitation devices (e.g., a class of printers or class of tablets, etc.). In various embodiments, an exploitation entity may be defined as a user or a set of one or more exploitation devices associated with (e.g., registered to) the user.

An exploitable content file has a permissions identifier relative to an exploitation entity. Thus, when a user seeks to obtain exploitable content from system 100, embedding module 130 embeds the identifier into an exploitation copy (i.e., a copy to be exploited by a user on an exploitation device) of the exploitable content file. In various embodiments, the embedded identifier indicates a network address for ascertaining the exploitation permissions for the particular exploitation copy. For example, embedding module 130 might embed a URL (Uniform Resource Locator) into a document. The URL points to a network location that contains the exploitation permissions for the document relative to the exploitation entity.

In an example, a user requesting a document from system 100 might have a subscription to a service where the user's exploitation permissions include printing permissions for all content hosted by system 100. Accordingly, embedding module 130 embeds a URL into an exploitation copy of the requested document and communications module 140 provides the exploitation copy to an exploitation device 150 that allows the user to print the requested document. In various embodiments, exploitation device 150 accesses the URL embedded in the document before exploiting (in this case printing) the content to determine whether the exploitation permissions associated with the URL permit the exploitation. If authorized based on the permissions, exploitation device 150 exploits (e.g. prints) the content.

In managing exploitation permissions, rights management module 120 may upgrade the exploitation permission for an exploitable content file relative to an exploitation entity in view of an authorized request. For example, a user may have limited permissions to print a particular document based on the user's purchase of the particular content. However, if the user requests an upgrade to the exploitation permissions and rights management module 120 obtains authorization for the request (e.g., via verified payment for the upgrade), then rights management module 120 handles the upgrade. In various embodiments, this upgrade might include updating the permissions information at the network location of the embedded URL for each content file affected by the upgrade. In other words, if the user upgrades permissions for a particular document, the permissions stored at the URL embedded into that particular document might be updated to reflect the upgrade. For example, the upgrade might allow the document to be viewed on a mobile device in addition to printing the document (or vice versa). Exploitation permission upgrades could be content-specific, exploitation entity specific (e.g., a single device, a class of devices, a group of users, a single user, etc.) or some combination of these.

In some embodiments, exploitation permission upgrades may involve providing the same content in a different format compatible with desired use. For example, if a user initially obtains a PDF (Portable Document Format) document for viewing on a mobile device and then upgrades the permissions to allow printing of the document, communications module 140 might provide an exploitation copy of the document (with embedded identifier) to the printer in a print-ready format (e.g. PCL or Printer Control Language).

Figure 2 is a block diagram illustrating a system according to various embodiments. Figure 2 includes particular components, modules, etc. according to various embodiments. However, in different embodiments, more, fewer, and/or other components, modules, arrangements of components/modules, etc. may be used according to the teachings described herein. In addition, various components, modules, etc. described herein may be implemented as one or more software modules, hardware modules, special-purpose hardware (e.g., application specific hardware, application specific integrated circuits (ASICs), embedded controllers, hardwired circuitry, etc.), or some combination of these. Various modules and/or components illustrated in Figure 2 may be implemented as a non-transitory computer-readable storage medium containing instructions executed by a processor (e.g., processor 250) and stored in a memory (e.g., memory 210) for performing the operations and functions discussed herein.

In the example system illustrated in Figure 2, the modules and components of system 200 may be integrated into a single physical computing device (e.g. server) or they may be physically distributed among multiple computing devices (e.g. servers) connected, for example, over a network.

A memory 210 stores an exploitable content file. Exploitable content files could be uploaded to system 200 by a content provider, a content owner, a business, a consumer, or other suitable entity. Exploitable content files may be designated with default exploitation permissions defined, at least in part, by the entity uploading the content. The uploading entity may also select or define an upgrade scheme for upgrading exploitation permissions for some or all uploaded content.

Rights management module 220 manages exploitation permissions for the exploitable content file specific to an exploitation entity. While an exploitation entity may be a single device, it could also be a class of exploitation devices (e.g., a class of printers or class of tablets, etc.). An exploitation entity may alternatively be a user or a set of one or more exploitation devices associated with (e.g., registered to) the user.

In an example, a user of portable computing device 260 (e.g., a smartphone) browses a website or traverses a device app to find and download (e.g. via purchase) exploitable content (e.g. an article to read). The download may include the rights/permissions to display the content on portable computing device 260. In connection with the user request, the requested content is retrieved from memory 210 and embedding module 230 embeds a URL into the content. The URL links to a description of the permissions tied to this particular copy of the requested content. In other words, permissions for exploiting the particular copy of the requested content are determined based on the information stored at the location indicated by the URL. This means that permissions can be changed (e.g., upgraded) even after a particular copy of the requested content has been downloaded. Thus, rather than having to download a different copy of a particular content item for each different type of exploitation, content and service providers can provide more granularity and flexibility in their content offerings while maintaining the user simplicity of only dealing with a single exploitable content file.

Once an identifier (e.g., URL, text or numeric code, etc.) has been embedded into a copy of the requested content, communications module 240 provides the exploitation copy to an exploitation device (e.g., portable computing device 260) associated with the user who requested it. In this example, the permissions associated with the identifier embedded into the exploitation copy allow the user to exploit (e.g., view/read) the content on portable computing device 260. In other words, the permissions might specify portable computing device 260 as authorized to exploit the content based on its device ID or serial number, for example. Or perhaps the permissions are broader and allow viewing the content on an entire class of devices, allowing the user to transfer the copy from portable computing device 260 (e.g., a smartphone) to another portable computing device (e.g., a tablet) using NFC (near-field communications), Wi-Fi or other suitable communication protocol between two devices.

In addition to identifying and determining exploitation permissions for different content relative to different exploitation entities, rights management module 220 may upgrade the exploitation permissions for an exploitable content file relative to an exploitation entity in view of an authorized request. In the example above, where the user obtains an exploitation copy of an exploitable content file for use on portable computing device 260, the user may later desire to print the content from the exploitable content file on printer 270. To do this, the user might transfer the exploitation copy (or a copy of the exploitation copy) to printer 270 (e.g. via NFC, Wi-Fi, Bluetooth or other suitable communications protocol). Before exploiting (e.g., printing) the received content, printer 270 accesses the embedded URL for the content and determines whether exploitation is authorized on printer 270 in view of the exploitation permissions. If exploitation is authorized, then printer 270 proceeds to print the content. If not authorized, a message might be displayed or sent to the user asking whether the user would like to upgrade (e.g., via purchase) the exploitation permissions to allow printing on printer 270. If the user indicates the desire to upgrade, this request is communicated to rights management module 220 and the permissions are upgraded (e.g. after charging the user's account or credit/debit card). It should be noted that the amount charged for upgrading the permissions may consider the value of existing permissions, thereby charging the value of all permissions less the value of the existing permissions. In this way, users are given the ability to purchase only the permissions that are relevant to them instead of a lump sum for all permissions (though an all-permissions option could also be offered, perhaps as a subscription service).

In connection with upgrading exploitation permissions, rights management module 220 updates the permissions at the network address for the embedded URL of the content as issue. For example, if printing permissions are being added, then those printing permissions are updated in the information stored at the URL location for the exploitation copy of the content. Other types of permissions may be included as options in various embodiments. Examples of permissions, include, but are not limited to, printing attributes (e.g., color vs. black and white, printing resolution, etc.), display resolution, audio quality, time constraints (e.g., finite exploitation time vs. unlimited exploitation time), etc.

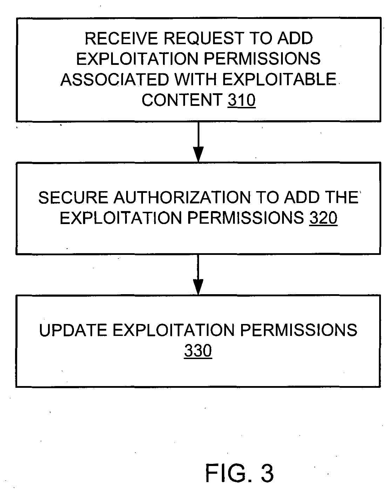

Figure 3 is a flow diagram of operation in a system according to various embodiments. Figure 3 includes particular operations and execution order according to certain embodiments. However, in different embodiments, other operations, omitting one or more of the depicted operations, and/or proceeding in other orders of execution may also be used according to teachings described herein.

A system receives 310 a request to add exploitation permissions to existing exploitations permissions associated an exploitable content file relative to an exploitation entity. As discussed above, an exploitation entity can be a single exploitation device, a class of exploitation devices, a user, a group of users, or a group of specific devices associated with a user or group of users. In response to the request, the system secures 320 authorization to add the exploitation permissions. For example, a system may be part of a service that allows users to obtain content for exploitation. The service may allow users to register and store a credit/debit card number with their account or users could purchase content directly without registering. In either case, securing authorization includes obtaining and/or verifying payment for the added exploitation permissions. In some embodiments, authorization could be obtained by other mechanisms, such as paying for content using earned tokens or points (e.g. as part of a customer loyalty program) or simply by obtaining indication of approval from an owner or manager of the content at issue.

The system updates 330 exploitation permissions after securing authorization. In various embodiments, updating exploitation permissions includes updating data and/or information maintained at a URL location to reflect the additional exploitation permissions.

In an example, when a user first selects content (e.g. an image) to download (e.g. for display on a smartphone), a URL is created that points to data/information identifying the permissions for the content. An identifier for the content itself may also be stored at the URL location. The URL is then embedded into an exploitation copy of the content that is sent to the requesting user. Thus, when the user subsequently desires to add permissions for the exploitation copy of the content, the data/information at the URL location is updated to reflect the added permissions (after securing authorization).

Exploitation devices verify exploitation permissions before exploiting content with an embedded exploitation permissions identifier (e.g., URL). Thus, an exploitation copy of content (e.g., an image) can have dynamic exploitation permissions based on the permissions data/information stored at the URL location for the exploitation copy of the content. In other words, different users can obtain different exploitation copies of the same content and the exploitation permissions may be different, depending on the data/information stored at the unique URL for each exploitation copy.

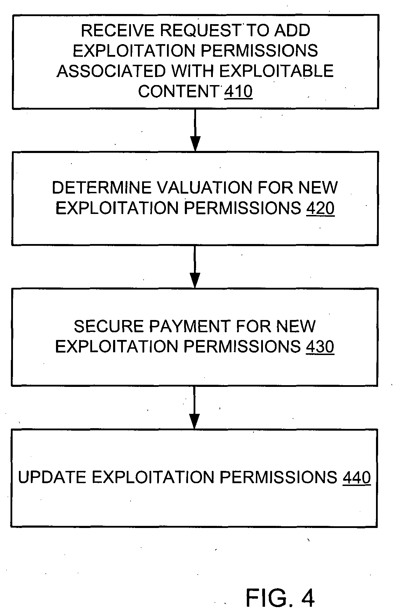

Figure 4 is a flow diagram of operation in a system according to various embodiments. Figure 4 includes particular operations and execution order according to certain embodiments. However, in different embodiments, other operations, omitting one or more of the depicted operations, and/or proceeding in other orders of execution may also be used according to teachings described herein.

A system receives 410 a request to add exploitation permissions to existing exploitations permissions associated an exploitable content file relative to an exploitation entity. The system determines 420 the value of the exploitation permissions to be added in view of the valuation of existing exploitation permissions for the exploitation entity. For example, certain existing exploitation permissions may have more value than other exploitation permissions. Also, users may have different combinations of existing exploitation permissions. Accordingly, the system determines the value of the new exploitation permissions in view of these or similar variables.

After determining the value of the requested exploitation permissions, the system secures 430 authorization (e.g., via payment, content owner consent, etc.) to add the exploitation permissions.

Various modifications may be made to the disclosed embodiments and implementations of the invention without departing from their scope. Therefore, the illustrations and examples herein should be construed in an illustrative, and not a restrictive sense.

## Claims

1. A system, comprising a content provider system (100, 200), at least one portable computing device and at least one printer, wherein the content provider system (100, 200) is arranged to:
receive a user request from the portable computing device (260) to download a exploitable content file stored on a memory of the system, wherein the exploitable content file is uploaded to the system by a content provider ;
embed an identifier into a copy of the exploitable content file, wherein the identifier indicates a network address of a remote location where exploitation permissions relative to an exploitation entity, comprising the portable computing device, are stored, the exploitation entity being a single device, a class of devices, a single user, a group of users, or of combination thereof;
provide a copy of the exploitable content file to the portable computing device (260); and
wherein the portable computing device (260) is arranged to:
check whether a user of the portable computing device is authorized to view the content of the copy of the exploitable content file based on the exploitation permissions corresponding to the identifier embedded in the exploitable content file and allowing the user to view the content of the copy of the exploitable content file on the portable computing device when the user is authorized;
the system being **characterized in that** the portable computing device (260) is also arranged to:
transfer a copy of the copy of the exploitable content file to the printer (270); and
wherein the printer (270) is arranged to:
access the identifier embedded in the copy of the copy of the exploitable content file and
determine whether printing is authorized on the printer (270) in view of the exploitation permissions stored at the remote location;
print the content of the copy of the copy of the exploitable content file if printing is authorized.

2. The system of claim 1, further comprising:
a rights management module (120, 220) to upgrade the exploitation permissions for the exploitable content file relative to the exploitation entity in response to an authorized request.

3. The system of claim 1, further comprising a communications module (140, 240) which is a near-field communications module.

4. A method comprising:
receiving, at a content provider system (100, 200), a user request from a portable computing device (260) to download a content file;
embedding, at the content provider system (100, 200), an identifier into a copy of the content file, wherein the identifier indicates a network address of a remote location where exploitation permissions relative to an exploitation entity, comprising the portable computing device, are stored, the exploitation entity being a single device, a class of devices, a single user, a group of users, or of combination thereof;
the content provider system (100, 200) providing the copy of the content file to the portable computing device (260);
the portable computing device (260) checking whether a user of the portable computing device is authorized to view the content of the copy of the content file based on the exploitation permissions corresponding to the identifier embedded in the content file and allowing the user to view the content of the copy of the content file on the portable computing device when the user is authorized;
the method being **characterized by**
the portable computing device (260) transferring a copy of the copy of the content file to a printer (270);
the printer (270) accessing the identifier embedded in the copy of the copy of the content file and determining whether printing is authorized on the printer (270) in view of the exploitation permissions stored at the remote location;
if printing is authorized, the printer (270) printing the content of the copy of the copy of the content file.

5. The method of claim 4, further comprising:
securing authorization, upon receiving a request to add exploitation permissions associated with the content file, to add the exploitation permissions to existing exploitation permissions; and
updating the exploitation permissions for the exploitation entity, wherein the exploitation permissions are located at the network address indicated by the identifier embedded in the content file.

6. The method of claim 5, wherein securing authorization comprises:
determining a valuation of the exploitation permissions to be added based at least in part on the valuation of the existing exploitation permissions for the exploitation entity; and
securing payment for the exploitation permissions to be added in view of the valuation of the exploitation permissions to be added.

## Patentansprüche

1. System, umfassend ein Inhaltsanbietersystem (100, 200), wenigstens eine tragbare Rechenvorrichtung und wenigstens einen Drucker, wobei das Inhaltsanbietersystem (100, 200) ausgebildet ist zum:
Empfangen einer Benutzeranforderung von der tragbaren Rechenvorrichtung (260), um eine nutzbare Inhaltsdatei, die in einem Speicher des Systems gespeichert ist, herunterzuladen, wobei die nutzbare Inhaltsdatei durch einen Inhaltsanbieter auf das System hochgeladen wird;
Einbetten einer Kennung in eine Kopie der nutzbaren Inhaltsdatei, wobei die Kennung eine Netzwerkadresse eines entfernten Standorts angibt, an dem Nutzungsberechtigungen in Bezug auf eine Nutzungseinheit, die die tragbare Rechenvorrichtung umfasst, gespeichert sind, wobei die Nutzungseinheit eine einzelne Vorrichtung, eine Klasse von Vorrichtungen, ein einzelner Benutzer, eine Gruppe von Benutzern oder von Kombinationen davon ist;
Bereitstellen einer Kopie der nutzbaren Inhaltsdatei an die tragbare Rechenvorrichtung (260); und
wobei die tragbare Rechenvorrichtung (260) ausgebildet ist zum:
Prüfen, ob ein Benutzer der tragbaren Rechenvorrichtung autorisiert ist, den Inhalt der Kopie der nutzbaren Inhaltsdatei aufzurufen, auf Grundlage dessen, dass die Nutzungsberechtigungen der Kennung entsprechen, die in die nutzbare Inhaltsdatei eingebettet ist, und Zulassen, dass der Benutzer den Inhalt der Kopie der nutzbaren Inhaltsdatei auf der tragbaren Rechenvorrichtung aufruft, wenn der Benutzer autorisiert ist;
wobei das System **dadurch gekennzeichnet ist, dass** die tragbare Rechenvorrichtung (260) außerdem ausgebildet ist zum:
Übertragen einer Kopie der Kopie der nutzbaren Inhaltsdatei an den Drucker (270); und
wobei der Drucker (270) ausgebildet ist zum:
Zugreifen auf die Kennung, die in der Kopie der Kopie der nutzbaren Inhaltsdatei eingebettet ist, und
Bestimmen, ob Drucken auf dem Drucker (270) unter Berücksichtigung der an dem entfernten Standort gespeicherten Nutzungsberechtigungen autorisiert ist;
Drucken des Inhalts der Kopie der Kopie der nutzbaren Inhaltsdatei, wenn das Drucken autorisiert ist.

2. System nach Anspruch 1, ferner umfassend:
ein Rechteverwaltungsmodul (120, 220) zum Heraufstufen der Nutzungsberechtigungen für die nutzbare Inhaltsdatei in Bezug auf die Nutzungseinheit in Reaktion auf eine autorisierte Anforderung.

3. System nach Anspruch 1, ferner umfassend ein Kommunikationsmodul (140, 240), das ein Nahfeldkommunikationsmodul ist.

4. Verfahren, umfassend:
Empfangen, an einem Inhaltsanbietersystem (100, 200), einer Benutzeranforderung von einer tragbaren Rechenvorrichtung (260) zum Herunterladen einer Inhaltsdatei;
Einbetten, am Inhaltsanbietersystem (100, 200), einer Kennung in eine Kopie der Inhaltsdatei, wobei die Kennung eine Netzwerkadresse eines entfernten Standorts angibt, an dem Nutzungsberechtigungen in Bezug auf eine Nutzungseinheit, die die tragbare Rechenvorrichtung umfasst, gespeichert sind, wobei die Nutzungseinheit eine einzelne Vorrichtung, eine Klasse von Vorrichtungen, ein einzelner Benutzer, eine Gruppe von Benutzern oder von Kombinationen davon ist;
wobei das Inhaltsanbietersystem (100, 200) die Kopie der Inhaltsdatei an die tragbare Rechenvorrichtung (260) bereitstellt;
wobei die tragbare Rechenvorrichtung (260) prüft, ob ein Benutzer der tragbaren Rechenvorrichtung autorisiert ist, den Inhalt der Kopie der Inhaltsdatei aufzurufen, auf Grundlage dessen, dass die Nutzungsberechtigungen der Kennung entsprechen, die in die Inhaltsdatei eingebettet ist, und zulässt, dass der Benutzer den Inhalt der Kopie der Inhaltsdatei auf der tragbaren Rechenvorrichtung aufruft, wenn der Benutzer autorisiert ist;
wobei das Verfahren **dadurch gekennzeichnet ist, dass**
die tragbare Rechenvorrichtung (260) eine Kopie der Kopie der Inhaltsdatei an einen Drucker (270) überträgt;
wobei der Drucker (270) auf die Kennung zugreift, die in der Kopie der Kopie der Inhaltsdatei eingebettet ist, und bestimmt, ob Drucken auf dem Drucker (270) unter Berücksichtigung der an dem entfernten Standort gespeicherten Nutzungsberechtigungen autorisiert ist;
wobei der Drucker (270) den Inhalt der Kopie der Kopie der Inhaltsdatei druckt, wenn das Drucken autorisiert ist.

5. Verfahren nach Anspruch 4, ferner umfassend:
Erhalten von Autorisierung, wenn eine Anforderung zum Hinzufügen von Nutzungsberechtigungen im Zusammenhang mit der Inhaltsdatei empfangen wird, um die Nutzungsberechtigungen zu existierenden Nutzungsberechtigungen hinzuzufügen und
Aktualisieren der Nutzungsberechtigungen für die Nutzungseinheit, wobei sich die Nutzungsberechtigungen an der Netzwerkadresse befinden, die von der Kennung angegeben wird, die in die Inhaltsdatei eingebettet ist.

6. Verfahren nach Anspruch 5, wobei das Erhalten von Autorisierung umfasst:
Bestimmen einer Bewertung der hinzuzufügenden Nutzungsberechtigungen wenigstens teilweise auf Grundlage der Bewertung der existierenden Nutzungsberechtigungen für die Nutzungseinheit; und
Erhalten einer Zahlung für die hinzuzufügenden Nutzungsberechtigungen unter Berücksichtigung der Bewertung der hinzuzufügenden Nutzungsberechtigungen.

## Revendications

1. Système, comprenant un système de fourniture de contenu (100, 200), au moins un dispositif informatique portable et au moins une imprimante, dans lequel le système de fourniture de contenu (100, 200) est agencé pour :
recevoir une demande d'utilisateur provenant du dispositif informatique portable (260) pour télécharger un fichier de contenu exploitable stocké dans une mémoire du système, le fichier de contenu exploitable étant chargé sur le système par un fournisseur de contenu ;
incorporer un identifiant dans une copie du fichier de contenu exploitable, l'identifiant indiquant une adresse réseau d'un emplacement distant où des autorisations d'exploitation relatives à une entité d'exploitation, comprenant le dispositif informatique portable, sont stockées, l'entité d'exploitation étant un dispositif unique, une classe de dispositifs, un utilisateur unique, un groupe d'utilisateurs ou une combinaison de ceux-ci ;
fournir une copie du fichier de contenu exploitable au dispositif informatique portable (260) ; et
le dispositif informatique portable (260) étant agencé pour :
vérifier si un utilisateur du dispositif informatique portable est autorisé à visualiser le contenu de la copie du fichier de contenu exploitable sur la base des autorisations d'exploitation correspondant à l'identifiant incorporé dans le fichier de contenu exploitable et permettant à l'utilisateur de visualiser le contenu de la copie du fichier de contenu exploitable sur le dispositif informatique portable lorsque l'utilisateur y est autorisé ;
le système étant **caractérisé en ce que** le dispositif informatique portable (260) est également agencé pour :
transférer une copie de la copie du fichier de contenu exploitable à l'imprimante (270) ; et
l'imprimante (270) étant agencée pour :
accéder à l'identifiant incorporé dans la copie de la copie du fichier de contenu exploitable et
déterminer si l'impression est autorisée sur l'imprimante (270) compte tenu des autorisations d'exploitation stockées sur l'emplacement distant ;
imprimer le contenu de la copie de la copie du fichier de contenu exploitable si l'impression est autorisée.

2. Système selon la revendication 1, comprenant en outre :
un module de gestion des droits (120, 220) pour mettre à niveau les autorisations d'exploitation du fichier de contenu exploitable relatives à l'entité d'exploitation en réponse à une demande autorisée.

3. Système selon la revendication 1, comprenant en outre un module de communication (140, 240) qui est un module de communication en champ proche.

4. Procédé comprenant :
la réception, dans un système de fourniture de contenu (100, 200), d'une demande d'utilisateur provenant d'un dispositif informatique portable (260) pour télécharger un fichier de contenu ;
l'incorporation, dans le système de fourniture de contenu (100, 200), d'un identifiant dans une copie du fichier de contenu, l'identifiant indiquant une adresse réseau d'un emplacement distant où des autorisations d'exploitation relatives à une entité d'exploitation, comprenant le dispositif informatique portable, sont stockées, l'entité d'exploitation étant un dispositif unique, une classe de dispositifs, un utilisateur unique, un groupe d'utilisateurs ou une combinaison de ceux-ci ;
le système de fourniture de contenu (100, 200) fournissant la copie du fichier de contenu au dispositif informatique portable (260) ;
le dispositif informatique portable (260) vérifiant si un utilisateur du dispositif informatique portable est autorisé à visualiser le contenu de la copie du fichier de contenu sur la base des autorisations d'exploitation correspondant à l'identifiant incorporé dans le fichier de contenu et permettant à l'utilisateur de visualiser le contenu de la copie du fichier de contenu sur le dispositif informatique portable lorsque l'utilisateur y est autorisé ;
le procédé étant **caractérisé en ce que**
le dispositif informatique portable (260) transfère une copie de la copie du fichier de contenu à une imprimante (270) ;
l'imprimante (270) accède à l'identifiant incorporé dans la copie de la copie du fichier de contenu et détermine si une impression est autorisée sur l'imprimante (270) compte tenu des autorisations d'exploitation stockées sur l'emplacement distant ;
si l'impression est autorisée, l'imprimante (270) imprime le contenu de la copie de la copie du fichier de contenu.

5. Procédé selon la revendication 4, comprenant en outre :
l'obtention d'une autorisation, lors de la réception d'une demande pour ajouter les autorisations d'exploitation associées au fichier de contenu, afin d'ajouter les autorisations d'exploitation aux autorisations d'exploitation existantes ; et
la mise à jour des autorisations d'exploitation pour l'entité d'exploitation, les autorisations d'exploitation étant situées à l'adresse réseau indiquée par l'identifiant incorporé dans le fichier de contenu.

6. Procédé selon la revendication 5, dans lequel l'obtention de l'autorisation comprend :
la détermination d'une évaluation des autorisations d'exploitation à ajouter en fonction au moins en partie de l'évaluation des autorisations d'exploitation existantes pour l'entité d'exploitation ; et
l'obtention du paiement pour les autorisations d'exploitation à ajouter compte tenu de l'évaluation des autorisations d'exploitation à ajouter.
